# EUROPÄISCHE PATENTSCHRIFT

(11) **EP 2 909 035 B1**
(45) Veröffentlichungstag und Bekanntmachung des Hinweises auf die Patenterteilung: **24.07.2019**
(21) Anmeldenummer: 13783285.3
(22) Anmeldetag: 18.10.2013
(51) Int. Cl.: B41J 2/44, B23K 26/08, B41J 2/47, B23K 26/03, G02B 7/182

(54) **VORRICHTUNG ZUR LASERPERSONALISIERUNG VON SICHERHEITSELEMENTEN**
APPARATUS FOR LASER PERSONALIZATION OF SECURITY ELEMENTS
DISPOSITIF DE PERSONNALISATION D'ÉLÉMENTS DE SÉCURITÉ AU MOYEN D'UN LASER

(30) Priorität: 22.10.2012 DE 102012219249
(43) Veröffentlichungstag der Anmeldung: 26.08.2015
(73) Patentinhaber: Bundesdruckerei GmbH, 10969 Berlin (DE)
(72) Erfinder: KROMPHARDT, Matthias, 14109 Berlin (DE); HIRSCH, Robert, 83620 Vagen (DE); KRAMER, Thomas, 80805 München (DE); RICHTER, Werner, 80999 München (DE); KRAMER, Ralf Stefan, 81675 München (DE)
(74) Vertreter: Patentanwälte Bressel und Partner mbB
(86) Internationale Anmeldenummer: PCT/EP2013/071875
(87) Internationale Veröffentlichungsnummer: WO 2014/064014

(56) Entgegenhaltungen:
- EP-A1- 0 589 732
- EP-A1- 0 863 481
- WO-A1-00/13839
- DE-A1- 4 429 110
- DE-A1-102007 018 402
- DE-A1-102010 032 800
- DE-U1-202008 007 564
- JP-A- 2006 303 080

## Beschreibung

Die Erfindung betrifft eine Vorrichtung zum Markieren von Sicherheitsdokumenten mittels eines Laserstrahls.

Aus dem Stand der Technik ist es bekannt, Gegenstände, beispielsweise auf Kunststoffbasis hergestellte Dokumente, insbesondere Wert- und Sicherheitsdokumente, mit einem Laser zu markieren. Auf Kunststoffbasis hergestellte Dokumente werden häufig aus einzelnen Folien, die aus demselben oder unterschiedlichen Kunststoffen bestehen, zu einem Dokumentkörper zusammengefügt. Hierbei werden einige oder alle der Folien so ausgestaltet, dass diese für den menschlichen Betrachter nicht wahrnehmbare oder zumindest nicht ins Auge tretende Pigmente umfassen, die eine Absorption von Laserstrahlung begünstigen. Die bei der Absorption der Laserstrahlung absorbierte Energie wird genutzt, um das Kunststoffmaterial der entsprechend präparierten Folie, d.h. der aus dieser Folie gebildeten Schicht, in dem Dokument zu verändern. Insbesondere werden chemische Verbindungen der Polymere aufgebrochen, aus denen das Kunststoffmaterial gebildet ist, und eine Carbonisierung herbeigeführt. Dieses führt zu einer Schwärzung des beispielsweise ursprünglich transparenten Kunststoffmaterials. Alternativ ist es möglich, andere farbliche Änderungen oder strukturelle Änderungen durch die Lasereinstrahlung zu bewirken.

Bei einer Lasermarkierung von beispielsweise kunststoffbasierten Dokumenten ist es über eine Steuerung einer Pulsenergie der einzelnen Laserpulse möglich, einen Schwärzungsgrad des Kunststoffes zu kontrollieren. Hierüber können beispielsweise Graustufen bei der Lasermarkierung erzeugt werden. Vorteilhafterweise wird jeder Bildpunkt durch eine Wechselwirkung eines einzigen Laserpulses mit dem Material des Dokuments erzeugt. Über eine Strahlführungseinrichtung wird somit der von dem Laser erzeugte Laserstrahl über das Dokument bewegt, so dass durch die einzelnen Pulse in dem Laserstrahl jeweils einzelne Bildpunkte auf dem Dokument bzw. im Innern des Dokuments markiert werden. Auch eine kontinuierliche vektorartige Markierung ist möglich.

Aus der JP2006303080 A ist eine Vorrichtung zum Markieren von Wafern bekannt.

Aus der DE 10 2010 032 800 A1 sind ein Verfahren und eine Vorrichtung zur Qualitätssicherung des Bearbeitungsergebnisses bei der Bearbeitung eines Werkstückes mittels Laser, insbesondere was die Positionierung und Leistungskontrolle der auf dem Werkstück auftreffenden Energiemenge inklusive Selbstkalibrierung und Driftkompensation betrifft, bekannt. Vor dem Bearbeiten des Werkstückes wird wenigstens ein Laserlicht-Sensor mit geringer räumlicher Ausdehnung mit der Maschine fest verbunden und seine Position im Maschinen-Koordinatensystem ermittelt, der wenigstens eine Laserlicht-Sensor mit Laserlicht abgetastet, beim maximalen SensorSignal die Auftreffposition des Laserstrahls als übereinstimmend mit der Position des Laserlicht-Sensors unterstellt und im Laser-Koordinatensystem bestimmt, aus der Differenz der Position des Sensors im Maschinen-Koordinatensystem und der Auftreffposition des Laserstrahls im Laser-Koordinatensystem wenigstens ein Punkt-Korrekturwert automatisch errechnet zur Anpassung des Laser-Koordinatensystems an das Maschinen-Koordinatensystem und bei der anschließenden Bearbeitung des Werkstückes der Laserstrahl nach dem Laser-Koordinatensystem unter Berücksichtigung des wenigstens einen Korrekturwertes ausgelenkt. DE 10 2010 032 800 A1 offenbart eine Vorrichtung gemäß dem Oberbegriff des Anspruchs 1.

Aus der WO00/13839 ist eine Laserstrahlungsquelle hoher Leistungsdichte und hoher Energie, die vorzugsweise zur Materialbearbeitung verwendet werden kann, bekannt. Es ist eine optische Einheit zur Formung des Laserstrahls auf einer Bearbeitungsfläche vorgesehen. Es werden mehrere direkt modulierbare diodengepumpte Faserlaser verwendet, deren Ausgänge in einem Bündel angeordnet sind und die aus den Lasern austretenden Strahlen mittels der optischen Einheit so zusammengefasst und gebündelt sind, dass die Strahlen in einem Punkt auf einer Bearbeitungsfläche auftreffen.

Aus der DE 44 29 110 C2 ist eine Laserbeschriftungsanlage für Ausweiskarten oder dergleichen bekannt, bei der ein Laserstrahl über eine Zweikoordinaten-Strahlablenkvorrichtung abgelenkt wird und über eine Planfeldoptik auf das zu markierende Sicherheitsdokument geführt wird.

Die DE 20 2008 007 564 U1 beschreibt eine Vorrichtung zur Personalisierung einer Chipkarte, wobei die Vorrichtung eine Aufnahmeeinheit, eine Kontaktiereinheit, eine Transporteinheit, eine Lasereinheit und eine Ausgabeeinheit für die Chipkarte umfasst, wobei die Transporteinheit eine kardanische Aufhängung zur Aufnahme der Chipkarte umfasst, mittels welcher diese frei positionierbar ist.

Je größer eine flächige Ausdehnung des Sicherheitsdokuments ist, welches markiert werden soll, d.h. je größer die flächige Ausdehnung des potentiellen Markierungsbereiches auf dem Sicherheitsdokument ist, desto größer wird die optische Weglänge zwischen der Zweikoordinaten-Strahlablenkungsvorrichtung und der Markierungsebene bzw. zwischen der Planfeldoptik und der Markierungsebene. Grund hierfür sind optische und mechanische Limitierungen durch Strahlablenkvorrichtung und Planfeldoptik. Daher nimmt eine Größe der Beschriftungsvorrichtung, beispielsweise eine Bauhöhe, bei einer Anordnung der Markierungsebene in einer Horizontalen mit der Größe des möglichen Markierungsbereichs zu. Dieses ist insbesondere im Hinblick auf eine Dezentralisierung der Lasermarkierung von Sicherheitsdokumenten nachteilig.

Der Erfindung liegt somit die technische Aufgabe zugrunde, bekannte Lasermarkierungsvorrichtungen dahingehend zu verbessern, dass diese in einer kompakteren Bauform ausführbar sind.

Die technische Aufgabe wird durch eine Vorrichtung zur Laserpersonalisierung von Sicherheitsdokumenten gemäß dem Anspruch 1 gelöst, welche einen Laser zum Erzeugen eines Laserstrahls, eine Zweikoordinatenablenkeinrichtung zum gezielten Ablenken des Laserstrahls um unterschiedliche Raumwinkel und eine Planfeldoptik umfasst, sodass die unter unterschiedlichen Raumwinkeln abgelenkte Laserstrahl an unterschiedlichen Positionen einer Sollmarkierungsebene fokussiert sind, wobei erfindungsgemäß vorgesehen ist, dass zwischen der Sollmarkierungsebene und der Planfeldoptik eine Umlenkeinheit angeordnet ist und eine Hauptachse der Planfeldoptik gegenüber der Oberflächennormale der Sollmarkierungsebene verschwenkt ist. Hierdurch wird es möglich, den Strahlengang zwischen der Planfeldoptik und der Sollmarkierungsebene "abzuwinkeln" und so eine kompaktere Bauform zu ermöglichen. Die insgesamt benötigte optische Weglänge zwischen der Zweikoordinatenablenkeinrichtung und der Sollmarkierungsebene bzw. zwischen der Planfeldoptik und der Sollmarkierungsebene kann insgesamt nicht verkürzt werden, jedoch kann der Strahlengang quasi "gefaltet" werden. Der Winkel zwischen der optischen Achse der Planfeldoptik und der Oberflächennormale der Sollmarkierungsebene ist in der Regel ein spitzer Winkel. Daher lassen sich kompakte Bauformen beispielsweise mit einer geringeren Bauhöhe realisieren, wenn angenommen wird, dass die Sollmarkierungsebene horizontal ausgerichtet ist.

Die Vorrichtung ist so ausgebildet, dass diese eine Dokumentenaufnahme zum Aufnehmen und Halten eines Sicherheitsdokuments aufweist. Als Sicherheitsdokument wird hier auch eine Seite eines Passbuches, insbesondere eine als Laminationskörper eingebundene Personalisierungsseite mit den persönlichen Angaben eines Passbesitzers oder designierten Passinhabers, aufgefasst. Die Dokumentenaufnahme ist vorzugsweise so ausgebildet, dass eine Oberfläche des in der Aufnahme angeordneten Sicherheitsdokuments parallel zu der Sollmarkierungsebene orientiert ist oder orientierbar ist. Vorzugsweise liegt die Sollmarkierungsebene auf der Oberfläche oder in einer Materialschichtebene, welche parallel zur Oberfläche ist, um dort die Lasermarkierungen auszuführen.

Erfindungsgemäß, um auch Markierungen von so genannten Changeable Laser Images oder Multiple Laser Images ausführen zu können, ist vorgesehen, dass die Dokumentenaufnahme drehbar um eine parallel zur Sollmarkierungsebene orientierte Drehachse gelagert ist. Über eine Antriebseinheit ist die Dokumentenaufnahme dann um diese Drehachse gesteuert schwenkbar.

Bei einer bevorzugten Ausführungsform ist die Umlenkeinheit als Planspiegel ausgeführt. Hierbei werden aus der Lasertechnik übliche Spiegel eingesetzt, die insbesondere an die speziell verwendete Laserwellenlänge angepasst sind. Beispielsweise werden als Laser Nd:YAG-Laser mit der Grundwellenlänge von 1.064 nm zur Lasermarkierung eingesetzt. Ein Planspiegel wäre dann für den benötigten Umlenkungswinkel und diese Wellenlänge entsprechend beschichtet, um eine hohe Reflektivität nahe 100 % zu erreichen.

Bei einer Weiterbildung der Erfindung ist die Dokumentenaufnahme zusätzlich um eine quer zu der einen Drehachse orientierten weiteren Drehachse schwenkbar. Über eine weitere Antriebseinheit kann somit eine Verschwenkung um diese weitere Drehachse ausgeführt werden. Somit sind Markierungen unter allen Raumwinkeln einer Hemisphäre bezüglich der Oberflächennormale einer Dokumentoberfläche möglich. Da die Planfeldoptik so ausgelegt ist, dass die Laserstrahlung in der Sollmarkierungsebene, welche plan und eben ist, an jeder Position in der Sollmarkierungsebene fokussiert ist, ist bei einer Einstrahlung auf eine Dokumentoberfläche, die gegenüber der Sollmarkierungsebene verschwenkt ist, nicht mehr mit optimaler Fokussierbedingung möglich, sofern lediglich die Planfeldoptik zur Fokussierung genutzt wird. Um bei einem verschwenkten Sicherheitsdokument optische Weglängenunterschiede zwischen dem verschwenkten Dokument und der Sollmarkierungsebene auszugleichen, ist bei einer Ausführungsform eine Optikeinheit vorgesehen, welche gesteuert eine Fokuslänge der Gesamtanordnung bzw. eine Strahlfleckgröße der Laserstrahlung in der Zweikoordinatenablenkeinrichtung, z.B. auf einem Ablenkspiegel, variieren kann.

Nachfolgend wird die Erfindung unter Bezugnahme auf eine Zeichnung näher erläutert. Hierbei zeigen:

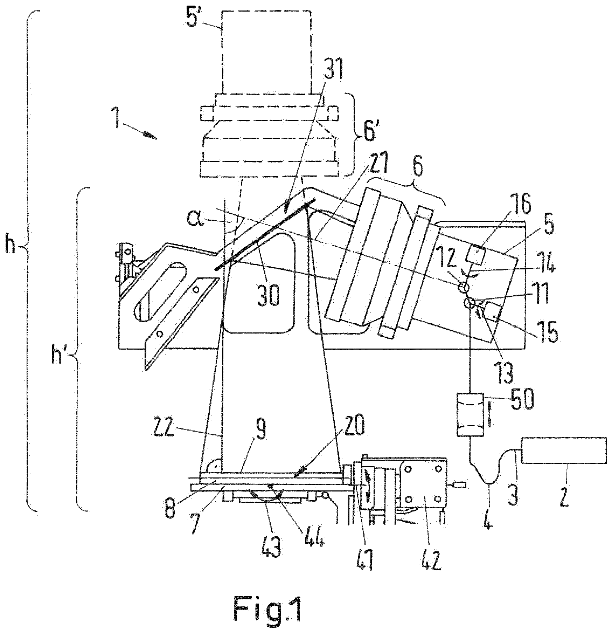

- Fig. 1: eine schematische Darstellung einer Vorrichtung zur Laserpersonalisierung von Sicherheitsdokumenten.

Die Vorrichtung 1 umfasst einen Laser 2 zum Erzeugen von Laserstrahlung 3, welche über eine Zweikoordinatenablenkeinrichtung 5 und eine Planfeldoptik 6 zu einer Dokumentenaufnahme 7 geführt wird, um ein in oder auf der Dokumentenaufnahme 7 angeordnetes Sicherheitsdokument 8 gezielt lokal markieren zu können. Eine Zweikoordinatenablenkeinrichtung 5 ist in der Lage, zugeführte Laserstrahlung 3 unter unterschiedlichen Raumwinkeln abzulenken. Hierfür umfasst die Zweikoordinatenablenkeinrichtung 5 in der Regel zwei Spiegel 11, 12, die um zueinander senkrecht orientierte Achsen 13, 14 schwenkbar gelagert sind. Angetrieben werden die Achsen jeweils mit einem Galvanometermotor 15, 16. Ordnet man den Achsen 13, 14 Koordinatenachsen eines Koordinatensystems zu, so kann über den einen Spiegel 11, beispielsweise eine Ablenkung entlang einer Y-Achse und mittels des anderen Spiegels eine Ablenkung entlang einer X-Achse eines kartesischen Koordinationssystems bewirkt werden. Insgesamt kann der von dem Laser 2 zugeführte Laserstrahl 3, der mittels der Planfeldoptik 6 abgebildet wird, an jeden beliebigen Punkt in einer zweidimensionalen Sollmarkierungsebene 20 positioniert werden. Die Planfeldoptik 6 ist hierbei so ausgebildet, dass die Laserstrahlung an jeder Position in der Sollmarkierungsebene fokussiert ist.

Bei den Vorrichtungen nach dem Stand der Technik ist die Sollmarkierungsebene 20 senkrecht zur optischen Achse 21 der Planfeldoptik 6 orientiert, welche durch den Mittelpunkt der Planfeldoptik 6 verläuft. Die optische Achse 21 der Planfeldoptik 6 ist somit senkrecht zu einer Hauptebene der Planfeldoptik 6 orientiert.

Bei der in Fig. 1 dargestellten erfindungsgemäßen Ausführungsform der Vorrichtung ist zwischen der Planfeldoptik 6 und der Sollmarkierungsebene 20 eine als planer Spiegel 30 ausgebildete Umlenkeinrichtung 31 angeordnet. Somit wird erreicht, dass die optische Achse 21 der Planfeldoptik 6 und eine Oberflächennormale 22 der Sollmarkierungsebene einen spitzen Winkel α einschließen. Hierdurch wird erreicht, dass eine Baulänge oder Bauhöhe h' geringer ist als jene Bauhöhe h, die eine Lasermarkierungsvorrichtung nach dem Stand der Technik aufweist, welche hinsichtlich der Lasermarkierung dieselben Parameter bezüglich einer Fläche der Sollmarkierungsebene, der optischen Eigenschaften der Planfeldoptik und der Zweikoordinatenablenkeinrichtung sowie der Parameter der Laserstrahlung gleich ausgebildet ist. Die Anordnung der Planfeldoptik 6' und der Zweikoordinatenablenkeinrichtung 5', wie sie bei einer Vorrichtung nach dem Stand der Technik angeordnet wären, sind gestrichelt angedeutet. Die dargestellte Ausführungsform der Erfindung führt somit dazu, dass eine kompaktere Bauform der Vorrichtung zur Laserbeschriftung realisiert ist.

Ist der Planspiegel 30 beispielsweise für infrarote Strahlung mittels Interferenzschichten auf einem im sichtbaren Wellenlängenbereich transparenten Trägermaterial, z. B. Glas, ausgebildet, so kann senkrecht über der Sollmarkierungsebene 20 eine Kamera (nicht dargestellt) angeordnet werden. Diese kann senkrecht durch den Planspiegel 30 der Umlenkeinrichtung 31 auf die Sollmarkierungsebene bzw. das Sicherheitsdokument 8 "blicken". Dieses ist ein Vorteil, da bei der Abbildung keine Verzerrungen auftreten, wenn die Dokumentaufnahme 7 sich in ihrer Grundstellung befindet. In dieser ist die Dokumentaufnahme 7 in Fig. 1 dargestellt. Die Kamera kann beispielsweise im sichtbaren Wellenlängenbereich zur Kontrolle der aufgebrachten Markierungen genutzt werden.

Die Dokumentenaufnahme 7 ist vorzugsweise so ausgebildet, dass in einer Grundstellung, die in Fig. 1 gezeigt ist, ein in der Dokumentenaufnahme 7 oder auf der Dokumentenaufnahme 7 angeordnetes Sicherheitsdokument 8 bezüglich seiner Oberfläche 9 planparallel zur der Sollmarkierungsebene 20 orientiert ist. Diese kann auf der Oberfläche 9 des Sicherheitsdokuments 8 oder im Innern des Sicherheitsdokuments 8 liegen.

Um CLI- und/oder MLI-Markierungen ausführen zu können, bei denen die Laserstrahlung durch ein im Sicherheitsdokument 8 ausgebildetes Mikrolinsenarray im Innern des Sicherheitsdokuments abgebildet wird, ist die Dokumentenaufnahme 7 um mindestens eine Drehachse 41 drehbar gelagert und kann mit einem Motor 42 rotatorisch gesteuert verschwenkt werden. Bei der dargestellten Ausführungsform ist die Dokumentenaufnahme 7 über einen zweiten Motor 43 um eine weitere Drehachse 44, welche senkrecht zur ersten Drehachse 41 orientiert ist, schwenkbar, sodass beliebige Orientierungen gegenüber der Sollmarkierungsebene 20 durch eine Oberfläche 9 des Sicherheitsdokuments 8 eingenommen werden können. Da jedoch die Planfeldoptik 6 nur für eine gleichmäßige Fokussierung in der Sollmarkierungsebene 20 sorgt, ist es vorteilhaft, bei einem Verschwenken der Dokumentoberfläche 9 mittels der Dokumentenaufnahme 7 die Fokuslänge der gesamten Vorrichtung bzw. einen Strahldurchmesser auf den Spiegeln 11, 12 der Zweikoordinatenablenkeinrichtung 5 zu beeinflussen, sodass eine optimale Fokussierung der Laserstrahlung 2 auf dem oder in dem Sicherheitsdokument 8 erfolgt. Daher kann abhängig von dem Markierungsort mittels einer als Fokusanpasseinrichtung 50 bezeichneten optischen Einrichtung, welche zwischen dem Laser 2 und der Zweikoordinatenablenkeinrichtung 5 angeordnet ist, die Gesamtfokussierung gesteuert variiert werden. Diese Fokusvariation wird vorzugsweise über mehrere relativ zueinander parallel zu ihren optischen Achsen bewegbare Linsen realisiert.

Bei einer bevorzugten Ausführungsform wird die Laserstrahlung zu der Fokusanpasseinrichtung 50 oder der Zweikoordinatenablenkeinrichtung 5 über eine optische Lichtleitfaser 4 zugeführt, da dann der Laser quasi positionsunabhängig an oder in der Vorrichtung eingebaut werden kann. Die dargestellte Position des Lasers ist hier nur aus Anschauungsgründen gewählt und vergrößert die Bauform nicht.

Es ergibt sich für den Fachmann, dass lediglich eine beispielhafte Ausführungsform der Erfindung beschrieben ist. Die einzelnen Komponenten, die Planfeldoptik, die Zweiachsablenkeinrichtung oder die Fokusanpasseinrichtung können anders ausgeführt sein als hier im Detail beschrieben ist, solange die hier beschriebene Funktion in gleicher Weise erfüllen.

### Bezugszeichenliste

- 1: Vorrichtung zur Lasermarkierung
- 2: Laser
- 3: Laserstrahl
- 4: Lichtleitfaser
- 5: Zweikoordinatenablenkeinrichtung
- 5': Zweikoordinatenablenkeinrichtung (angeordnet wie im Stand der Technik)
- 6: Planfeldoptik
- 6': Planfeldoptik (angeordnet wie im Stand der Technik)
- 7: Dokumentenaufnahme
- 8: Sicherheitsdokument
- 9: Oberfläche Sicherheitsdokument
- 11: Spiegel
- 12: Spiegel
- 13: Achse
- 14: Achse
- 15: Galvanometermotor
- 16: Galvanometermotor
- 20: Sollmarkierungsebene
- 21: optische Achse (der Planfeldoptik)
- 22: Oberflächennormale (der Sollmarkierungsebene)
- 30: Planspiegel
- 31: Umlenkeinrichtung
- 41: Drehachse
- 42: Motor
- 43: Motor
- 44: weitere Drehachse
- 50: Fokusanpasseinrichtung

## Patentansprüche

1. Vorrichtung (1) zur Laserpersonalisierung von Sicherheitsdokumenten (8) umfassend: einen Laser (2) zum Erzeugen eines Laserstrahls (3), eine Dokumentenaufnahme (7) zum Aufnehmen und Halten eines Sicherheitsdokuments (8), eine Zweikoordinatenablenkeinrichtung (5) zum gezielten Ablenken des Laserstrahls (3) um unterschiedliche Raumwinkel und eine Planfeldoptik (6), sodass der unter unterschiedlichen Raumwinkeln abgelenkte Laserstrahl (3) an unterschiedlichen Positionen einer Sollmarkierungsebene (20) fokussiert ist,
**dadurch gekennzeichnet, dass** zwischen der Sollmarkierungsebene (20) und der Planfeldoptik (6) eine Umlenkeinheit (31) angeordnet ist und eine optische Achse (21) der Planfeldoptik (6) gegenüber der Oberflächennormale (22) der Sollmarkierungsebene (20) verschwenkt ist, wobei die Dokumentenaufnahme (7) drehbar um eine parallel zur Sollmarkierungsebene orientierte Drehachse (41) gelagert ist.

2. Vorrichtung (1) nach Anspruch 1, **dadurch gekennzeichnet, dass** die Umlenkeinheit (31) ein Planspiegel (30) ist.

3. Vorrichtung (1) nach Anspruch 1 oder 2, **dadurch gekennzeichnet, dass** die Dokumentenaufnahme (7) so ausgebildet ist, dass eine Oberfläche (9) des in der Dokumentenaufnahme (7) angeordneten Sicherheitsdokuments (8) planparallel zu der Sollmarkierungsebene (20) orientiert ist oder orientierbar ist.

4. Vorrichtung nach einem der vorangehenden Ansprüche, **dadurch gekennzeichnet, dass** die Dokumentenaufnahme (7) zusätzlich um eine quer zu der einen Drehachse (41) orientierte weitere Drehachse (44) schwenkbar ist.

5. Vorrichtung (1) nach einem der vorangehenden Ansprüche, **dadurch gekennzeichnet, dass** in dem Strahlengang eine steuerbare Optikeinheit zur Änderung der Fokuslänge der Vorrichtung angeordnet ist.

6. Vorrichtung nach Anspruch 5, **dadurch gekennzeichnet, dass** die Optikeinheit zwischen dem Laser (2) und der Zweikoordinatenablenkeinrichtung (5) angeordnet ist.

## Claims

1. Apparatus (1) for laser personalisation of security documents (8), comprising: A laser (2) for generating a laser beam (3), a document receiver (7) for receiving and holding a security document (8), a two-coordinate deflection device (5) for targeted deflection of the laser beam (3) by different solid angles, and a plane field optical unit (6), such that the laser beam (3) deflected at different solid angles is focused at different positions of a desired marking plane (20),
**characterised in that** a deflection unit (31) is arranged between the desired marking plane (20) and the plane field optical unit (6), and an optical axis (21) of the plane field optical unit (6) is pivoted relative to the surface normal (22) of the desired marking plane, wherein the document receiver (7) is mounted such as be rotatable about an axis of rotation (41) parallel to the desired marking plane.

2. Apparatus (1) according to claim 1, **characterised in that** the deflection device (31) is a plane mirror (30).

3. Apparatus (1) according to claim 1 or 2, **characterised in that** the document receiver (7) is configured in such a way that a surface (9) of the security document (8) arranged in the document receiver (7) is or can be oriented plane parallel to the desired marking plane (20).

4. Apparatus according to any one of the preceding claims, **characterised in that** the document receiver (7) can additionally be pivoted about a further axis of rotation (44) oriented transversely to the one axis of rotation (41).

5. Apparatus (1) according to any one of the preceding claims, **characterised in that** a controllable optical unit is arranged in the beam path in order to change the focal length of the apparatus.

6. Apparatus according to claim 5, **characterised in that** the optical unit is arranged between the laser (2) and the two-coordinate deflection device (5).

## Revendications

1. Dispositif (1) servant à personnaliser au laser des documents de sécurité (8), comprenant : un laser (2) servant à générer un rayon laser (3), un système de réception de document (7) servant à recevoir et à maintenir un document de sécurité (8), un système déflecteur à deux coordonnées (5) servant à dévier de manière ciblée le rayon laser (3) selon des angles solides différents et une optique à champ plat (6), de sorte que le rayon laser (3) dévié selon des angles solides différents soit concentré sur des positions différentes d'un plan de marquage théorique (20),
**caractérisé en ce qu'**une unité de renvoi (31) est disposée entre le plan de marquage théorique (20) et l'optique à champ plat (6) et un axe optique (21) de l'optique à champ plat (6) est pivoté par rapport à la normale de surface (22) du plan de marquage théorique (20), dans lequel le système de réception de document (7) est monté de manière à pouvoir tourner autour d'un axe de rotation (41) orienté de manière parallèle par rapport au plan de marquage théorique.

2. Dispositif (1) selon la revendication 1, **caractérisé en ce que** l'unité de renvoi (31) est un miroir plat (30).

3. Dispositif (1) selon la revendication 1 ou 2, **caractérisé en ce que** le système de réception de document (7) est réalisé de telle sorte qu'une surface (9) du document de sécurité (8) disposé dans le système de réception de document (7) est orientée ou peut être orientée de manière plane parallèle par rapport au plan de marquage théorique (20).

4. Dispositif selon l'une quelconque des revendications précédentes, **caractérisé en ce que** le système de réception de document (7) peut pivoter en outre autour d'un autre axe de rotation (44) orienté de manière transversale par rapport à l'axe de rotation (41).

5. Dispositif (1) selon l'une quelconque des revendications précédentes, **caractérisé en ce qu'**une unité optique pouvant être commandée servant à modifier la longueur focale du dispositif est disposée sur le trajet optique.

6. Dispositif selon la revendication 5, **caractérisé en ce que** l'unité optique est disposée entre le laser (2) et le système déflecteur à deux coordonnées (5).
